# EUROPÄISCHE PATENTSCHRIFT

(11) **EP 0 921 595 B1**
(45) Veröffentlichungstag und Bekanntmachung des Hinweises auf die Patenterteilung: **26.03.2003**
(21) Anmeldenummer: 98122063.5
(22) Anmeldetag: 20.11.1998
(51) Int. Cl.: H01R 9/24, H02G 3/10

(54) **Anschlusskasten**
Junction box
Boîte de jonction

(30) Priorität: 21.11.1997 DE 29720674 U
(43) Veröffentlichungstag der Anmeldung: 09.06.1999
(73) Patentinhaber: PAUL JORDAN ELEKTROTECHNISCHE FABRIK, GmbH & Co., D-12249 Berlin (DE)
(72) Erfinder: Valerius, Jörg, 13057 Berlin (DE); Pfeiffer, Bernhard Dr., 12309 Berlin (DE)
(74) Vertreter: Alber, Norbert, Dipl.-Ing.

(56) Entgegenhaltungen:
- DE-A- 19 537 076
- DE-A- 19 626 205
- DE-C- 4 318 015
- DE-C- 4 409 781

## Beschreibung

### I. Anwendungsgebiet

Die Erfindung betrifft einen elektrischen Anschlußkasten.

### II. Technischer Hintergrund

In einem solchen Anschlußkasten werden elektrische Bauteile wie Klemmen, Klemmleisten, Sicherungen samt Sicherungssockeln, Kurzschließeinrichtungen etc. aufgenommen, um sie vor den Umgebungseinflüssen zu schützen. Entsprechend führt das Zugangskabel, über welches die elektrische Energie zugeführt wird, in den Anschlußkasten ebenso hinein wie das Abgangskabel, welches zum angeschlossenen elektrischen Verbraucher führt.

Je schwieriger die Umgebungsverhältnisse sowie die Raumsituation an der Einbaustelle ist, um so schwieriger ist es, das Ziel eines kostengünstig herzustellenden, leicht zu handhabenden Anschlußkastens zu erreichen.

Ein schwieriger Anwendungsfall ist beispielsweise ein Anschlußkasten, wie er im hohlen Inneren eines Laternenmastes untergebracht ist, und zum Anschluß der elektrischen Straßenlaterne an die in der Erde verlegten Versorgungsleitungen dient.

Obwohl der Lichtmast an sich geschlossen ist, kann im Inneren dennoch Feuchtigkeit, beispielsweise durch Kondensation oder bei starkem Regen durch Spritzwasser, auftreten. Die Einbauverhältnisse sind extrem beengt und die aus dem Untergrund herangeführten Zugangskabel sind aufgrund der großen Leitungsquerschnitte sehr biegesteif und schlecht zu handhaben. Auch das Abisolieren und vor allem richtige Ablängen ist entsprechend schwierig.

Derartige Anschlußkästen bestehen üblicherweise aus einem Unterteil, welches die elektrischen Bauteile trägt. Weiterhin wird an der Zugangs-Stirnseite in der Regel ein Oberteil auf das Unterteil aufgeschraubt, wodurch eine Schelle zum Klemmen und Abdichten des bzw. der Zugangskabel gebildet wird, welche durch einen entsprechenden Schelleneinsatz aus abdichtenden, meist elastischem, Material abgedichtet werden kann.

An diesem Oberteil ist häufig eine Schutzabdeckung befestigt, die von der Zugangsstirnseite so weit nach oben ragt, daß die Zugangsklemmen noch mit abgedeckt werden, um an den darüber liegenden Teilen des Anschlußkastens auch unter Spannung arbeiten zu können.

Durch Aufsetzen eines Deckels wird der Anschlußkasten geschlossen.

Weiterhin werden Anschlußkästen, insbesondere für Lichtmasten, danach unterschieden, ob das bzw. die Abgangskabel den Anschlußkasten nach oben verlassen, oder nach unten, also parallel zu dem Zugangskabel.

Letzteres bietet den Vorteil, daß die von der Zugangsseite gegenüberliegende, nach oben gerichtete Stirnfläche des Anschlußkastens von keinem Kabel durchdrungen wird, und von oben auf den Anschlußkasten herabtropfendes Wasser etc. aufgrund der einfacheren Abdichtung leichter ferngehalten werden kann. Nachteilig bei dieser Lösung sind die durch die parallel nach unten herauszuführenden Zugangs- und Abgangskabel dort beengteren Raumverhältnisse.

In der Regel wird die Abgangsrichtung jedoch durch die regionalen Energieversorgungsunternehmen oder die die Straßenlaternen betreibenden Kommunen vorgegeben.

Aus EP 0 740 106 A1 das als nächstliegender Stand der Technik angesehen wird, ist ein Anschtußkasten mit rastbaren Einbauteilen bekannt, bei dem Einbauteile, in Längsrichtung des Anschlußkastens gesehen, in verschiedenen Positionen mit Rasteinrichtungen unabhängig voneinander verrastbar sind.

### III. Darstellung der Erfindung

### a) Technische Aufgabe

Es ist daher die Aufgabe gemäß der vorliegenden Erfindung, einen Anschlußkasten zu schaffen, bei dem die Abgangskabel wahlweise nach oben oder nach unten herausgeführt und die elektrischen Einbauten entsprechend im Inneren montiert sein können, und der dennoch einfach und kostengünstig herzustellen sein soll sowie einfach in der Handhabung und Montage.

### b) Lösung der Aufgabe

Diese Aufgabe wird durch die Merkmale des Anspruches 1 gelöst. Vorteilhafte Ausführungsformen ergeben sich aus den Unteransprüchen.

Wenn die Zugangskabel von den elektrischen Einbauten aus nach oben wegführen sollen, müssen - um Rückführungen der Adern oder der die elektrischen Elemente verbindenden Verdrahtung bzw. Stromschienen zu vermeiden - von unten nach oben betrachtet der Eingangsklemmbereich, die Sicherung und die Abgangsklemmen nacheinander aufsteigend angeordnet sein.

Bei Herausführung der Abgangskabel nach unten sollten sich zumindest die Abgangsklemmen unterhalb der Sicherungen befinden. Die Zugangsklemmen werden in der Regel immer die am tiefsten liegende Position beibehalten.

Somit muß - je nach Abgangsrichtung - eine unterschiedliche Montage der Sicherungssockel und der Abgangsklemmen relativ zueinander bei einem wahlweise nutzbaren Anschlußkasten möglich sein.

Um für jede der möglichen Abgangsrichtungen nicht einen separaten Anschlußkasten anbieten zu müssen, werden für die einzelnen Abgangsrichtungen unterschiedliche Befestigungspositionen für manche der elektrischen Baugruppen innerhalb des Anschlußkastens vorgesehen, und zwar insbesondere für die Einzelteile der Abgangsmodule, also der elektrischen Baugruppen, die der Abgangsseite zuzurechnen sind, nämlich insbesondere die Sicherungssockel und die PE/N-Abgangsklemmen.

Aus Gründen einer einfachen Vormontage der Anschlußkästen ist es bereits bekannt, die elektrischen Bauteile am Unterteil durch ein darüber gesetztes Abgangshalteteil in ihrer Lage zu fixieren, welches ebenfalls aus Kunststoff besteht und gegenüber dem Unterteil verschraubt und/oder verrastet wird.

Wenn die Befestigungspositionen für die elektrischen Einzelteile so gewählt werden, daß auch ein und dasselbe Abgangshalteteil, lediglich in gedrehter Position, verwendet werden kann, müssen lediglich unterschiedlich lange und ggf. unterschiedlich geformte Leiterschienen, welche die Eingangsklemmen mit den Sicherungssockeln und/oder den Abgangsklemmen verbinden, bei der Vormontage verwendet werden.

Besonders günstig ist es in diesem Zusammenhang, wenn ein und dasselbe Abgangshalteteil auf dem Unterteil in zwei unterschiedlichen Drehlagen, aber an der gleichen Stelle, befestigt werden kann, wodurch den unterschiedlichen Abgangsrichtungen entsprochen wird.

Im einen Fall befinden sich dann die Sicherungssockel oben und die PE/N-Abgangsklemmen sowie die Sicherungsabgangsklemmen unten, während im anderen Fall die Relation zueinander genau umgekehrt ist.

Je nachdem, auf Höhe welches der Elemente sich der Drehpunkt des Abgangshalteteiles befindet, sind für dieses elektrische Bauteil, beispielsweise die Sicherungs-Abgangsklemmen, keine zwei, sondern nur eine Aufnahmeposition am Unterteil vorhanden.

Für die wahlweise Abgangsrichtung muß ferner in der Zugangsstirnseite eine zusätzliche Durchtrittsmöglichkeit vorhanden sein, also in dem dort am Unterteil befestigten Oberteil und dem im Durchgang verwendeten Schelleneinsatz. Die obere Stirnseite weist in der Regel eine oder mehrere im Ausgangszustand geschlossene Tüllen aus weichem Kunststoff auf, die erst im Falle des Kabelabgangs nach oben aufgeschnitten oder vollständig entfernt werden, im Ausgangszustand jedoch vollständig dicht gegenüber dem Unterteil bzw. Deckel sind.

Bei nach unten geführten Abgangskabeln werden diese bei Vorhandensein einer Schutzabdeckung für den Eingangsklemmbereich über die Oberseite dieser Schutzabdeckung geführt, und vorzugsweise auf der Oberseite dieser Schutzabdeckung auch fixiert.

Besonders vorteilhaft werden hierfür formschlüssige Rastaufnahmen auf der Oberseite der Schutzabdeckung angeordnet, die insbesondere so ausgestaltet sind, daß sie vor Einbau des Anschlußkastens lösbare, also verlierbare. Einzelteile des Anschlußkastens, insbesondere die lösbaren Oberteile von Mantelklemmen, die als Zugangsklemmen verwendet werden könnten. aufnehmen können.

### c) Ausführungsbeispiele

Eine Ausführungsform gemäß der Erfindung ist im folgenden beispielhaft anhand der Figuren näher beschrieben. Es zeigen:
- Figuren 1:: den Anschlußkasten in Längsschnitt, Aufsicht und Stirnansicht von der Zugangsseite her und im Querschnitt durch die Sicherungssockel,
- Fig. 2:: das Unterteil des Anschlußkastens gemäß Fig. 1 in der Aufsicht,
- Fig. 3:: die Sicherungsauflage 4 einzeln,
- Fig. 4:: das Abgangshalteteil 5 einzeln,
- Fig. 5:: das Oberteil mit der Schutzabdeckung in der Aufsicht,
- Fig. 6:: eine Darstellung analog zum Längsschnitt der Fig. 1a, jedoch im angeschlossenen Zustand des Anschlußkastens,
- Fig. 7:: einen Schnitt durch die Schutzabdeckung an der Linie VII-VII, und
- Fig. 8:: eine Darstellung analog zur Aufsicht der Fig. 1a, jedoch im angeschlossenen Zustand des Anschlußkastens.

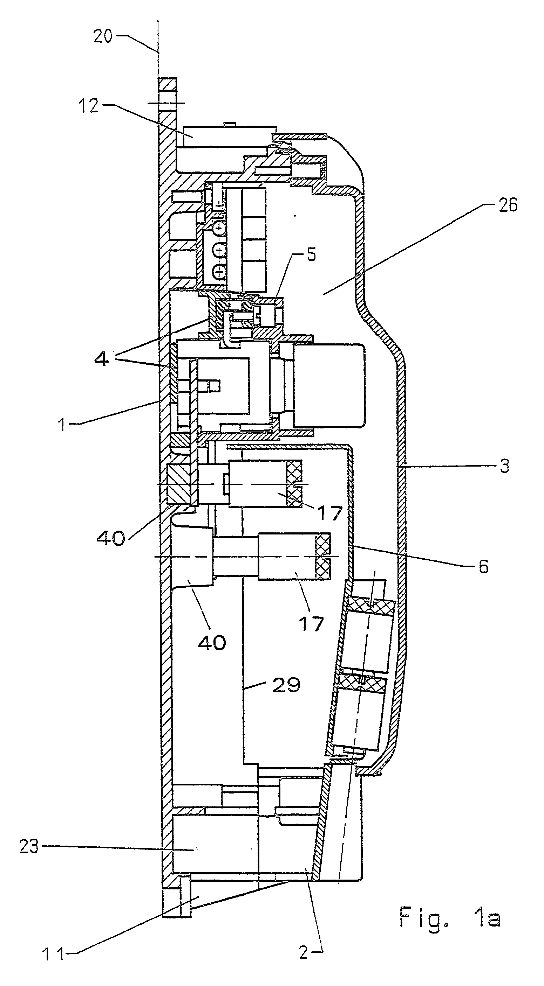

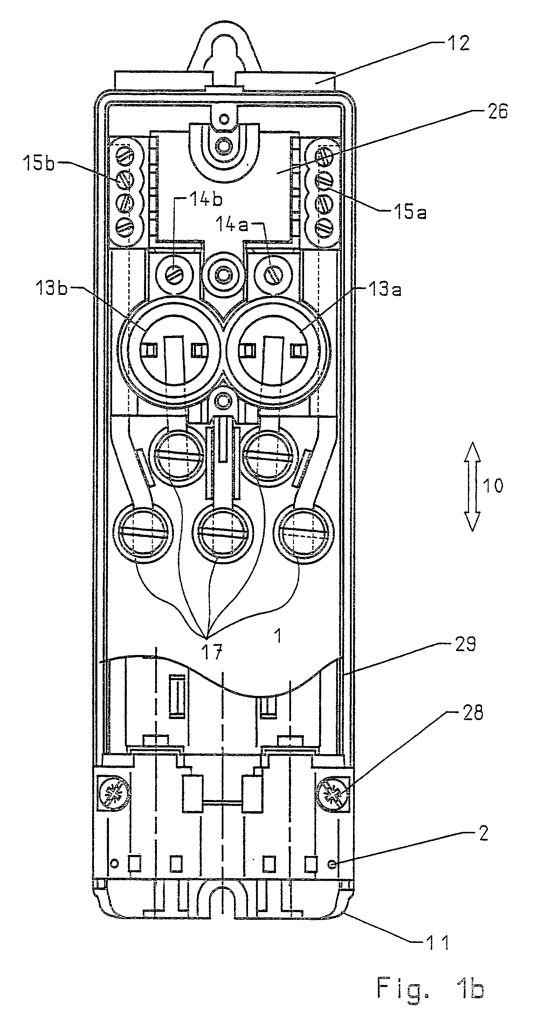

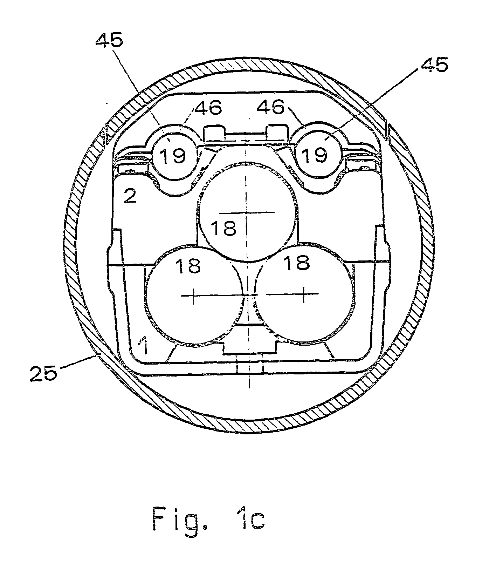

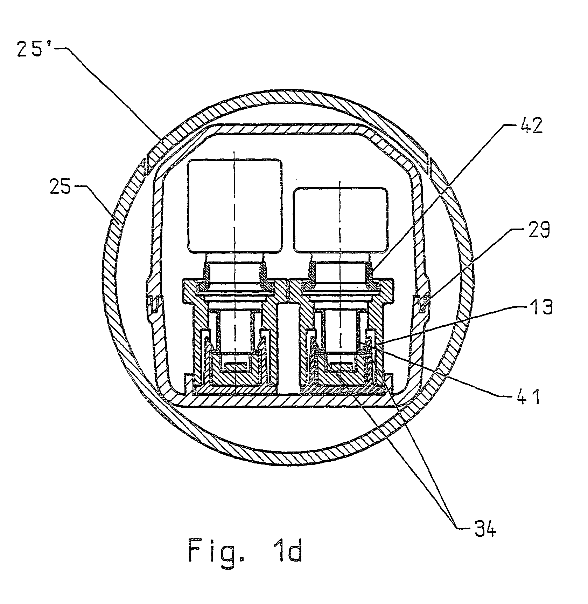

In den Figuren 1 ist der Anschlußkasten fertig vormontiert, jedoch ohne von außen zugeführte Kabel dargestellt. Der längliche Anschlußkasten wird mit seiner Längsrichtung 10 in der Regel senkrecht im hohlen Inneren eines Lichtmastes 25 befestigt, dessen kreisförmiger Querschnitt ebenfalls wiederum einen Deckel 25' aufweist, wie am besten der Querschnittsdarstellung der Fig. 1d zu entnehmen.

Wie am besten Fig. 1a zeigt, fungiert das etwa wannenförmige Unterteil 1. welches sich über die gesamte Grundfläche des Anschlußkastens erstreckt, als Basis. Im oberen Bereich, dem Abgangsbereich 26, ist im inneren Freiraum des Unterteiles 1 auf die Oberseite des Unterteiles ein Abgangshalteteil 5 aufgeschraubt, wobei die Einzelteile des gesamten elektrischen Abgangsmoduls, nämlich die Sicherungssockel 13a, 13b, die Sicherungsabgangsklemmen 14a, 14b, die an den Abgangsfahnen der Sicherungssockel befestigt sind, sowie die PE/N-Abgangsklemmen 15a, 15b in den jeweiligen, spezifisch geformten, zwischen dem Unterteil 1 und dem Abgangshalteteil 5 gebildeten Freiräumen formschlüssig exakt positioniert werden.

Etwa in der Mitte der Längserstreckung sind am Unterteil 1 die Positionen für die Zugangsklemmen 17 vorgesehen, und der Freiraum unterhalb der Zugangsklemmen 17, der zusammen mit den Zugangsklemmen als Zugangsbereich bezeichnet wird, dient der Verzweigung der Adern des Zugangskabels 18.

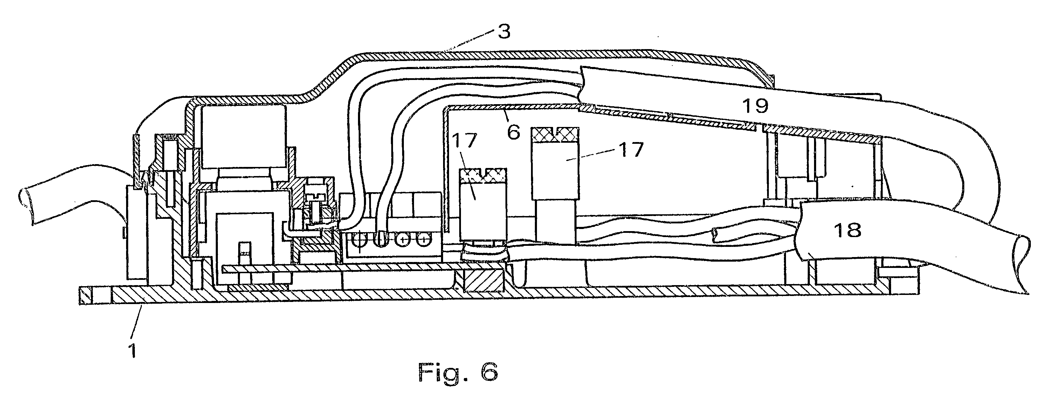

Letzteres ist am besten anhand der Fig. 6 zu erkennen, welches eine Längsschnittdarstellung analog zur Fig. 1a ist, jedoch im angeschlossenen Zustand.

Sowohl das Zugangskabel 18 als auch das Abgangskabel 19 verlassen den Anschlußkasten durch das in Fig. 6 rechte, also im montierten Zustand, untere, Ende, und die Enden der Adern des Abgangskabels 18 sind in den Zugangsklemmen 17 verklemmt.

Wie Fig. 1a weiter zeigt, ist nahe an der Zugangsstirnseite 11 auf die Oberseite des Unterteiles 1 ein Oberteil 2 mittels zweier Halteschrauben 28 aufgeschraubt, wodurch in diesem Bereich Unterteil 1 und Oberteil 2 als Schelle zur festen, dichten Halterung des dazwischen hindurchgeführten Zugangskabels 18 dient. Die Abdichtung erfolgt durch einen in Fig. 1a, 1b nicht dargestellten Schelleneinsatz, der meist aus einem als Dichtung einsetzbaren, elastischen Kunststoff, insbesondere Schaumstoff, besteht, in einem separat durch Stege oder Wände des Unterteiles 1 und/oder des Oberteiles 2 gebildeten Schellenfreiraum 23.

Vom Oberteil 2 aus ragt eine Schutzabdeckung 6 in ausreichendem Abstand oberhalb des Unterteiles 1 nach oben, also in Richtung auf den Abgangsbereich 26, so daß er auch die Zugangsklemmen 17 noch mit abdeckt.

Im geschlossenen Zustand des Anschlußkastens ist weiterhin ein Deckel 3 montiert, der oberhalb der Schutzabdeckung 6 verläuft und einerseits am Oberteil 2 befestigt ist, insbesondere schwenkbar befestigt ist, und ansonsten an der Berührungsfuge 29 gegenüber der Oberkante des Unterteiles 1 in an sich bekannter Art und Weise anliegt und abgedichtet ist.

In den Figuren 1a und 1b ist die Vormontage im Hinblick auf einen Kabelabgang nach oben durchgeführt. Die Sicherungs-Abgangsklemmen 14a, 14b weisen von den Sicherungssockeln 13a, 13b nach oben, und auch die PE/N-Abgangsklemmen 15a, 15b befinden sich oberhalb der Sicherungssockel 13a, 13b und auch oberhalb der Sicherungsabgangsklemmen 14a, 14b am seitlichen Rand des Innenraumes des Unterteiles 1.

Im Freiraum zwischen den links und rechts angeordneten PE/N-Abgangsklemmen 15a, 15b, die als Klemmleisten mit bis zu vier Klemmstellen ausgebildet sind. befindet sich der Abgangs-Klemmbereich, in dem die Verzweigung der Abgangskabel und Einschieben von innen nach außen in die PE/N-Abgangsklemmen 15a, 15b erfolgt.

Ein so angeklemmtes Abgangskabel 19 würde den Anschlußkasten durch die nach oben weisende Gegen-Stirnseite 12 verlassen.

Die Sicherungssockel, insbesondere mit ihren Paßeinsätzen, werden dabei nicht direkt mittels des Abgangshalteteiles 5 am Unterteil 1 gehalten. Vielmehr wird auf das Unterteil 1 zunächst eine Sicherungsauflage 4 aufgesetzt. Diese Sicherungsauflage 4 ist im Bereich der aufzusetzenden Sicherungssockel plattenförmig ausgebildet mit aus ihrer Ebene nach oben aufragenden je zwei Rasthaken 34 pro Sicherungssockel, die - wie am besten in Fig. 1d zu erkennen - den Paßeinsatz des Sicherungssockels auf der entsprechenden Auflagefläche des Sicherungssockels festklemmt. Die Sicherungsauflage 4 ist auf dem Unterteil 1 - vor dem Zusammenstecken mit Hilfe des Sicherungssockels - lediglich aufgelegt, oder kann zusätzlich mit dem Unterteil 1 verschraubt werden.

An die ebene Fläche im Bereich der Sicherungssockel schließt sich jeweils in Längsrichtung 10 ein Aufnahmeraum für je eine Sicherungsabgangsklemme 14a, 14b an, welcher von seitlichen Stegwänden 31 begrenzt wird.

Zwischen diesen Aufnahmeräumen für die Sicherungsabgangsklemmen 14 befindet sich ein Durchbruch 35, um das Schraubloch 32, welches turmförmig aus der Bodenplatte des Unterteiles 1 aufragt, erreichen und gegenüber diesem turmförmigen Fortsatz eine Positionierung bewirken zu können. Gleiches gilt für einen analogen Durchbruch 35' in Längsrichtung am anderen Ende der Sicherungsauflage 4. Zwischen den beiden plattenförmigen Bereichen zum Aufsetzen der Sicherungssockel weist die Sicherungsauflage 4 auf ihrer Längsmitte eine Aussparung 33 auf, die im wesentlichen X-förmig geformt ist.

Diese dienen dazu, die auf beiden Seiten jeder Aufnahmeposition für einen Sicherungssockel am Unterteil 1, von dessen Bodenplatte aufragend, ausgebildeten, bogenförmigen Stegwänden 36. die im Bereich zwischen zwei auf gleicher Höhe liegenden Aufnahmepositionen zu einer X-förmigen Stegwand vereinigt sind.

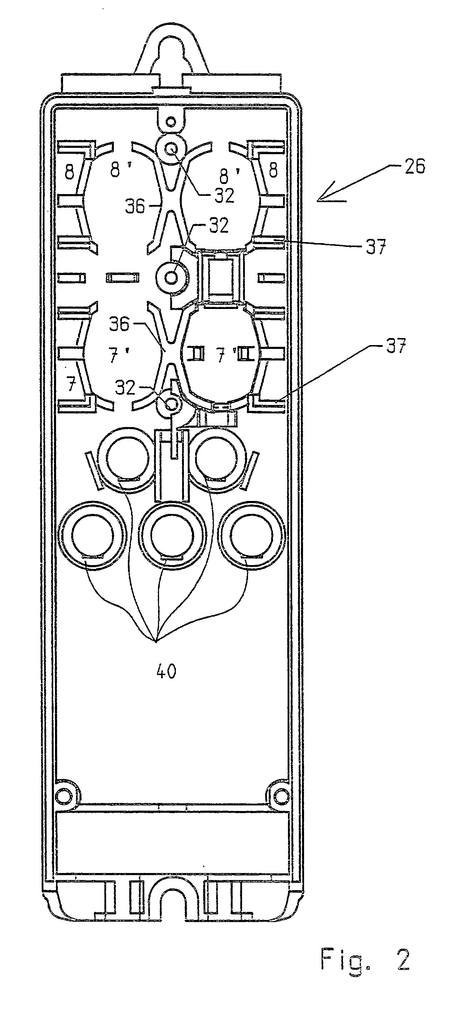

Wie die Aufsicht auf das Unterteil 1 der Fig. 2 deutlich zeigt, befinden sich im Abgangsbereich 26 somit auf zwei unterschiedlichen Längspositionen jeweils zwei Aufnahmepositionen 7', 8' für die Sicherungssockel nebeneinander. Am äußeren Rand zwischen den Aufnahmepositionen für die Sicherungssockel und der jeweiligen Seitenwand des Unterteiles befinden sich ferner quer zur Längsrichtung verlaufende, von der Bodenplatte des Unterteiles 1 aufsteigende Trennwände 37 zur Aufnahme jeweils einer Klemmleiste als PE/N-Abgangsklemme als zugangsnahe und zugangsferne Aufnahmeposition 7, 8 für die PE/N-Abgangsklemme 15a, 15b.

In Längsrichtung 10 zwischen den zugangsnahen und zugangsfernen Aufnahmepositionen und somit gleich weit von diesen entfernt befindet sich das mittige Schraubloch 32, und links und rechts hiervon die Aufnahmeposition für jeweils eine Sicherungsabgangsklemme 14a, 14b.

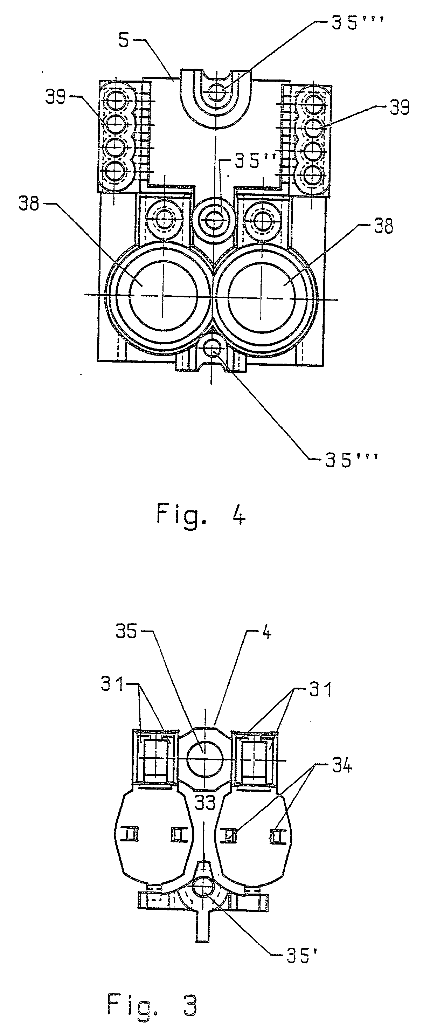

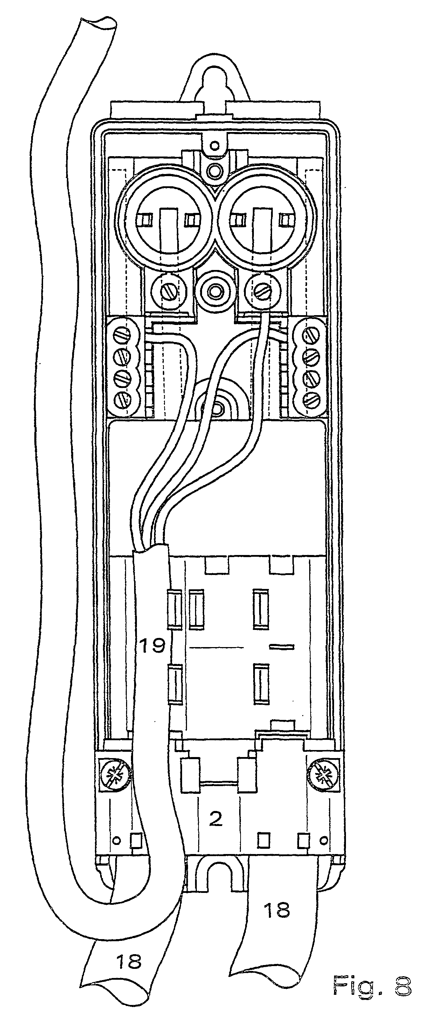

Damit ist ersichtlich, daß - je nach Abgangsrichtung des Kabels - die Sicherungsauflage 4 der Fig. 3 entweder wie dargestellt und in den Figuren 1 ersichtlich auf das Unterteil 1 gelegt wird, also mit dem Durchbruch 35 auf das mittige Schraubloch 32 des Unterteiles 1, oder um 180° um den Durchbruch 35 in der Ebene der Sicherungsauflage 4 gedreht, wie in Fig. 6 und 8 ersichtlich, so daß dann die Auflageflächen für die Sicherungssockel mit den Rasthaken 34 in der zugangsfernen Aufnahmeposition 8' des Unterteiles zu liegen kommen. Die Aufnahmeräume für die Sicherungsabgangsklemmen 14a, 14b tauschen dabei ihre Position bezüglich der entsprechenden Aufnahmeposition am Unterteil 1.

Ebenso ist auch das in Fig 4 separat dargestellte Abgangshalteteil 5 deckelförmig mit entsprechenden Öffnungen für die Verschraubung etc. so gestaltet, daß es einerseits zwei nebeneinander liegende Sicherungssockel abdeckt - mit jeweils ausreichend großer mittiger Öffnung 38, um die Sicherung ein- und ausschrauben zu können - sowie die zugehörigen Sicherungsabgangsklemmen 14a, 14b und PE/N-Abgangsklemmen 15a, 15b abzudecken - jeweils mit Öffnungen nach oben für die Zugänglichkeit zu den Klemmschrauben dieser Klemmen. In etwa der Mitte dieses Abgangshalteteiles 5 befindet sich ein Durchbruch 35" zum Verschrauben mit dem mittigen Schraubloch 32 im Abgangsbereich 26 des Unterteiles. Entsprechend kann dieses Abgangshalteteil wie die Sicherungsauflage 4 um 180° um diesen Durchbruch 35" gedreht - parallel zur Bodenebene 20 des Unterteiles - je nach gewünschter Abgangsrichtung aufgesetzt und verschraubt werden.

Zum weiteren Verschrauben dienen die weiteren Durchbrüche 35"' jeweils am oberen und unteren Ende dieses Abgangshalteteiles 5 auf der Mittelachse.

Die Aufnahmeräume 39 für die PE/N-Abgangsklemmen in Form einer Klemmleiste sind zur Seite nach außen vollständig offen, damit die Klemmleiste von dort eingeschoben werden kann, und nach oben ausreichend offen, um die Klemmschraube mit einem Schraubenzieher erreichen zu können und zum mittigen Freiraum, der dem Verzweigen der Adern des Abgangskabels dient, wiederum mit ausreichend großen Einzeldurchbrüchen versehen, um die Adern hier in die Klemmleisten einführen zu können.

Die unterhalb des Abgangsbereiches 26 angeordneten Aufnahmeräume 40 für die Mantelklemmen als Zugangsklemmen 17 sind in zwei Reihen übereinander angeordnet, nämlich einer Dreierreihe und einer Zweierreihe, wie am besten die Aufsicht der Fig. 1b zeigt, wobei die Zweierreihe versetzt fluchtend mit den Zwischenräumen der Dreierreihe angeordnet ist.

Fig. 1d zeigt, daß der freie Innenraum des Anschlußkastens ausreichend groß bemessen ist, um unterschiedlich hohe Sicherungssockel, die jeweils in der Regel eine Gewindehülse 42, einen Paßeinsatz 41 sowie den eigentlichen Sicherungssockel 13 umfassen, verwenden zu können.

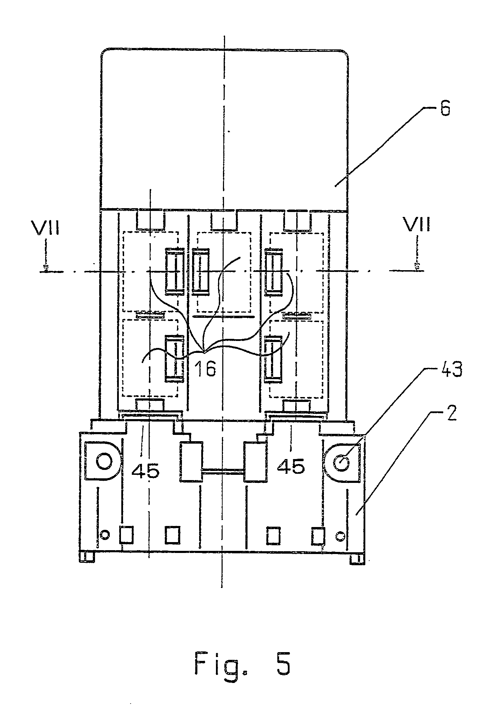

Fig. 5 zeigt in der Aufsicht die Schutzabdeckung 6, die am Oberteil 2 befestigt ist. Am Oberteil 2 sind dabei die Schraublöcher 43 zur Verschraubung mit dem Unterteil 1 zu erkennen. Auf der Schutzabdeckung 6 sind die Aufnahmen 16 für die Oberteile der Zugangsklemmen 17 in ebenfalls einer zweireihigen Verteilung dargestellt.

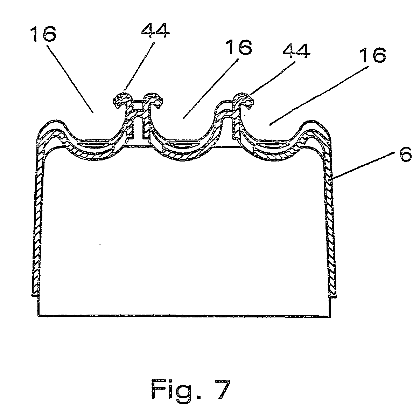

Fig. 7 zeigt einen Querschnitt entlang der Linie VII-VII der Fig. 5.

Dabei ist zu erkennen, daß die Aufnahmen 16 jeweils wannenförmig ausgebildet sind, so daß in jede der Aufnahmen ein vorzugsweise im Querschnitt zylindrischer Gegenstand eingelegt werden kann. Jeder Aufnahme 16 ist ein Vorsprung 44 zugeordnet, der hakenförmig neben der Aufnahme 16 nach oben ragt und einen darin eingelegten zylindrischen Gegenstand teilweise übergreift und damit formschlüssig in der Aufnahme 16 hält.

Auf diese Art und Weise können im Auslieferungszustand in diese Aufnahmen 16 die zylindrisch geformten Oberteile der als Zugangsklemmen 17 verwendeten Mantelklemmen eingesteckt werden, damit diese bei der Montage des Anschlußkastens nicht verlorengehen.

Nach Entfernen dieser Mantelklemmen stehen dann die Aufnahmen 16 zur Verfügung, um ein Abgangskabel 19, welches den Anschlußkasten nach unten verläßt - wie in den Darstellungen der Figuren 6 und 8 dargestellt - auf der Oberseite der Schutzabdeckung 6 in den gleichen Aufnahmen 16 zu halten. Dies ist deshalb möglich, weil der Durchmesser dieser Abgangskabel 19 in etwa dem Durchmesser der Oberteile der Mantelklemmen entspricht, und geringe Durchmesserdifferenzen von den elastischen Vorsprüngen 44 ausgeglichen werden.

Deshalb liegen die in Längsrichtung 10 hintereinander angeordneten Aufnahmen 16 zum Teil auch fluchtend zu den potentiellen Durchlässen 45, die im oberen Teil des Oberteiles 2 angeordnet sind, und dann Verwendung finden, wenn - wie in den Figuren 6 und 8 dargestellt - auch das Abgangskabel 19 den Anschlußkasten über die Zugangsseite verlassen soll.

Diese potentiellen Durchlässe 45 sind durch eine dünne, leicht wegzubrechende Wand im Ausgangszustand verschlossen, und werden bei Bedarf geöffnet.

Wie am besten in der Frontansicht der Fig. 1c zu erkennen, werden in den potentiellen Durchlässen 45 dort eingelegte Abgangskabel 19 durch auf das Oberteil 2 aufgeschraubte, die die potentiellen Durchlässe 15 durchlaufenden Kabel überspannende, Wendeschellen 46 gehalten, die je nach Auflageorientierung unterschiedliche Kabeldurchmesser der Abgangskabel 19 dort klemmen können.

Demgegenüber werden die Zugangskabel 18 in dem verbleibenden Freiraum zwischen dem Oberteil 2 und dem Unterteil 1 gehalten und dort - mittels des bereits erwähnten Schelleneinsatzes 22 - auch abgedichtet.

### BEZUGSZEICHENLISTE

- 1: Unterteil
- 2: Oberteil
- 3: Deckel
- 4: Sicherungsauflage
- 5: Abgangshalteteil
- 6: Schutzabdeckung
- 7, 7': zugangsnahe Aufnahmeposition
- 8, 8': zugangsferne Aufnahmeposition
- 9a - 9d: Leiterschienen
- 10: Längsrichtung
- 11: Zugangsstirnseite
- 12: Gegen-Stirnseite
- 13a, 13b: Sicherungssockel
- 14a, 14b: Sicherungsabgangsklemme
- 15a, 15b: PE/N-Abgangsklemme
- 16: Aufnahmen
- 17: Zugangsklemmen
- 18: Zugangskabel
- 19: Abgangskabel
- 19a - 19c: Adern
- 20: Bodenebene
- 21: Paßeinsätze
- 22: Schelleneinsatz
- 23: Schellenfreiraum
- 24: Kabeltülle
- 25: Lichtmast
- 26: Abgangsbereich
- 27: Zugangsbereich
- 28: Halteschraube
- 29: Berührungsfuge
- 30: Abgangsklemmbereich
- 31: Stegwand
- 32: Schraubloch
- 33: Aussparung
- 34: Rasthaken
- 35, 35': Durchbruch
- 36: Stegwand
- 37: Trennwände
- 38: Öffnung
- 39: Aufnahmeraum
- 40: Aufnahmeraum
- 41: Paßeinsatz
- 42: Gewindehülse
- 43: Schraublöcher
- 44: Vorsprung
- 45: potentielle Durchlässe
- 46: Wendeschellen

## Patentansprüche

1. Anschlußkasten zum Anschluß elektrischer Verbraucher mit einem als Basis fungierenden länglichen Unterteil (1), insbesondere für die Unterbringung in hohlen Lichtmasten, wobei das Unterteil (1) eine relativ zu einer Zugangsstirnseite (11) zugangsnahe (7, 7') sowie eine zugangsferne (8, 8') Aufnahmeposition für wenigstens ein Einzelteil der Abgangsmodule Sicherungssockel (13a, 13b), Sicherungsabgangsklemme (14a, 14b), PE/N-Abgangsklemmen (15a, 15b), aufweist,
**dadurch gekennzeichnet, daß**
alle Einzelteile der Abgangsmodule durch ein Abgangshalteteil (5), welches auf der Oberseite des Unterteiles (1) befestigbar ist, in Position gehalten werden, und insbesondere das Abgangshalteteil (5) in zwei sich um 180° in der Bodenebene unterscheidende Positionen auf dem Unterteil (1) befestigbar ist.

2. Anschlußkasten nach Anspruch 1,
**dadurch gekennzeichnet, daß**
die eine Befestigungs-Position des Abgangshalteteiles (5) der zugangsnahen Aufnahmeposition sowie die PE/N-Abgangsklemmen (15a, 15b) und der zugangsfernen Aufnahmeposition für die Sicherungssockel (13a, 13b) entspricht, während die andere Position des Abgangshalteteiles der zugangsfernen Aufnahmeposition sowie die PE/N-Abgangsklemmen (15a, 15b) und der zugangsnahen Aufnahmeposition für die Sicherungssockel (13a, 13b) entspricht.

3. Anschlußkasten nach Anspruch 1 oder 2,
**dadurch gekennzeichnet, daß**
bei beiden Befestigungspositionen des Abgangshalteteiles (5) auf dem Unterteil (1) die Aufnahmeposition der Sicherungsabgangsklemmen (14a, 14b) die gleichen sind.

4. Anschlußkasten nach einem der vorhergehenden Ansprüche,
**dadurch gekennzeichnet, daß**
nahe der Zugangs-Stirnseite (11) ein Oberteil (2) am Unterteil (1) befestigbar ist, wobei das Oberteil (2) eine Schutzabdeckung (6) wenigstens für den Bereich der Zugangsklemmen aufweist und auf der Oberseite der Schutzabdeckung (6) Aufnahmen (16), insbesondere rastbare, formschlüssige Aufnahmen (16), für lösbare Einzelteile der Zugangsklemmen (17) aufweisen, und insbesondere die Zugangsklemmen (17) Mantelklemmen sind, und insbesondere die Aufnahmen (16) zur Aufnahme der Abgangskabel (19) bzw. dessen Adern (19a, 19b, 19c) geeignet sind.

5. Anschlußkasten nach einem der vorhergehenden Ansprüche,
**dadurch gekennzeichnet, daß**
zwischen dem Unterteil (1) und dem Abgangshalteteil (5) eine Sicherungsauflage (4) anordenbar und gegenüber dem Unterteil (1) befestigbar ist, welche insbesondere von der Bodenebene (20) in den Anschlußkasten hinein aufragende Rasthaken (34) zum formschlüssigen Verrasten der Paßeinsätze (21) der Sicherungssockel (13a, 13b) aufweisen.

6. Anschlußkasten nach einem der vorhergehenden Ansprüche,
**dadurch gekennzeichnet, daß**
die Abdichtung des Anschlußkastens an der Zugangs-Stirnseite (11) gegenüber dem Zugangskabel (18) und ggf. Abgangskabel (19) mittels eines Schelleneinsatzes (22) aus Schaumstoff erfolgt, welcher in den Schellenfreiraum (23), den Unterteil (1) und Oberteil (2) zwischen sich bilden, einsetzbar ist.

7. Anschlußkasten nach einem der vorhergehenden Ansprüche,
**dadurch gekennzeichnet, daß**
an der Gegenstimseite (12) die Abdichtung des Anschlußkastens gegenüber einem hindurchführenden Abgangskabel (19) mittels einer im Ausgangszustand geschlossenen Kabeltülle (24) aus elastischem Kunststoff erfolgt.

8. Anschlußkasten nach einem der vorhergehenden Ansprüche,
**dadurch gekennzeichnet, daß**
als PE/N-Abgangsklemmen (15a, 15b) seitlich auf die Leiterschienen (9) aufschiebbare Klemmen vorhanden sind.

9. Anschlußkasten nach einem der vorhergehenden Ansprüche,
**dadurch gekennzeichnet, daß**
die Sicherungsabgangsklemmen (14a, 14b) direkt auf der Abgangsfahne des Sicherungssockels (13a, 13b) angeordnet sind.

10. Anschlußkasten nach einem der vorhergehenden Ansprüche,
**dadurch gekennzeichnet, daß**
im oberen Bereich des Oberteiles (2), vorzugsweise auf dessen Oberseite, wenigstens ein offenbarer potentieller Durchlaß (45) zum Hindurchführen eines Abgangskabels (19) vorhanden ist.

11. Anschlußkasten nach Anspruch 11,
**dadurch gekennzeichnet, daß**
der Durchlaß (45) in Längsrichtung (10) fluchtend zu wenigstens einer der Aufnahmen (16) für zylinderförmige Gegenstände auf der Oberseite der Schutzabdeckung (6) angeordnet ist.

## Revendications

1. Coffret de raccordement pour l'alimentation en électricité des divers usagers, ce coffret de raccordement étant destiné à être monté surtout à l'intérieur des poteaux d'éclairage. Le coffret comporte une composante inférieure (1) allongée servant de base, ladite composante inférieure (1) présentant des points de connexion pour au moins une pique composante d'un socle de coupe-circuits (13a, 13b), pour la pince de dérivation du coupe-circuit (14a, 14b), pour des pinces de dérivation PE/N (15a, 15b) du module de dérivation, ces points de connexion étant des points de connexion proches de l'entrée (7, 7'), respectivement des points de connexion éloignés de l'entrée (8, 8'), relatifs par rapport à une partie frontale (11), **caractérisé en ce que** toutes les composantes du module de dérivation sont retenues sur leurs places au moyen d'un support de dérivation (5), qui peut être monté sur la composante inférieure (1) dans deux positions séparées par un angle de 180° dans le plan de la base.

2. Coffret de raccordement selon la revendication précédente, **caractérisé en ce que** dans l'une des positions de fixation du support de dérivation (5), le point de connexion proche de l'entrée correspond aux pinces de dérivation PE/N (15a, 15b) et le point de connexion éloigné par rapport à l'entrée correspond au socle de coupe-circuits (13a, 13b), tendis que dans l'autre position du support de dérivation (5), le point de connexion éloigné par rapport à l'entrée correspond aux pinces de dérivation PE/N (15a, 15b) et le point de connexion proche de l'entrée correspond au socle de coupe-circuits (13a, 13b).

3. Coffret de raccordement selon l'une des revendications précédentes, **caractérisé en ce que** dans les deux positions de fixation du support de dérivation (5) sur la composante inférieure (1), le point de connexion des pinces de dérivation du coupe-circuit (14a, 14b) est le même.

4. Coffret de raccordement selon l'une des revendications précédentes, **caractérisé en ce que** dans la proximité de la partie frontale d'entrée (11), une composante supérieure (2) est fixée sur la composante inférieure (1), ladite composante supérieure (2) comportant, d'une part, une couche protectrice (6) au moins dans la zone des pinces d'entrée, et, d'autre part, dans la partie supérieure de la couche protectrice (6), des enceintes (16), notamment des enceintes (16) type support ayant la forme requise pour recevoir les composantes démontables des pinces d'entrée (17), lesdites pinces d'entrée (16) étant des pinces gainées, tendis que les enceintes (16) sont à leur tour adaptées pour la retenue du câble de dérivation (19), respectivement de ses conducteurs (19a, 19b, 19c).

5. Coffret de raccordement selon l'une des revendications précédentes, **caractérisé en ce que** un support de blocage (4) peut être placé et monté sur la composante inférieure (1), entre ladite composante inférieure (1) et le support de dérivation (5), ce support de blocage (4) comportant des cliquets de fermeture (34) s'engageant du plan de la base (20) vers l'intérieur du coffret de raccordement, visant à réaliser le blocage adéquat des composantes de passage (21) des socles de coupe-circuits (13a, 13b).

6. Coffret de raccordement selon l'une des revendications précédentes, **caractérisé en ce que** l'étanchéité du coffret de raccordement du côté de la partie frontale d'entrée (11) par rapport au câble d'alimentation (18) et au câble de dérivation (19) est réalisée en remplissant le collier (22) de matière synthétique spongieuse, cette matière synthétique spongieuse pouvant être introduite dans l'interstice de passage du collier (23), formé entre la composante inférieure (1) et la composante supérieure (2).

7. Coffret de raccordement selon l'une des revendications précédentes, **caractérisé en ce que** sur la part frontale opposée (12), l'étanchéité du coffret de raccordement par rapport à un câble de dérivation (19) qui passe par l'intérieur du coffret se réalise au moyen d'un manchon pour câble (24) en masse plastique élastique, ferme à l'extérieur.

8. Coffret de raccordement selon l'une des revendications précédentes, **caractérisé en ce que** des pinces à coulis se déplaçant dans le plan transversal sur des rails de guidage sont utilisées en tant que pinces de dérivation PE/N (15a, 15b).

9. Coffret de raccordement selon l'une des revendications précédentes, **caractérisé en ce que** les pinces de dérivation du coupe-circuit (14a, 14b) sont placées directement sur le secteur de dérivation du socle de coupe-circuits (13a, 13b).

10. Coffret de raccordement selon l'une des revendications précédentes, **caractérisé en ce que** au moins un orifice potentiel de passage (45) pouvant s'ouvrir pour permettre le passage du câble de dérivation (19) est disposé dans la moitié supérieure de la composante supérieure (2), notamment à l'extrémité supérieure de ladite composante, supérieure (2).

11. Coffret de raccordement selon l'une des revendications précédentes, **caractérisé en ce que** l'orifice potentiel de passage (45) est positionné en direction longitudinale (10), en alignement avec au moins l'une des enceintes (16) destinées aux objets cylindriques qui se trouvent sur la partie supérieure de la couche protectrice (16).

## Claims

1. Connection box to connect the electrical users having an oblong base fulfilling role lower component (1), in particular to be mounted inside hollow illumination towers, where the lower component (1) has a clamp position next to the entrance (7, 7') as well as a remote one in respect of the entrance (8, 8') relative to a frontal side (11) for at least one fuse cap component piece (13a, 13b), fuse branch terminals (14a, 14b), and branch module branch terminals PE/N (15a, 15b), **characterized in that** all the branch module component pieces are held in their position by means of a branch strut (5) which may be mounted to the lower component (1) in two positions spaced with 180 degrees in the base plane.

2. Connection box according to claim 1, **characterized in that** in one of the branch strut (5) mounting positions, the clamp position next to the entrance corresponds to the branch terminals PE/N (15a, 15b) and the remote position in respect of the entrance corresponds to the fuse cap (13a, 13b), while in the other position of the branch strut (5), the clamp position remote in respect of the entrance corresponds to the branch terminals PE/N (15a, 15b) and the clamp position next to the entrance corresponds to the fuse cap (13a, 13b).

3. Connection box according to claim 1 or 2, **characterized in that** in both mounting positions of the branch strut (5) to the lower component (1), the clamp position of the fuse branch terminals (14a, 14b) is the same.

4. Connection box according to any one of the preceding claims, **characterized in that** next to the entrance frontal side (11) there is an upper component (2) which may be mounted to the lower component (1), where the upper component (2) has a lagging (6) at least over the entrance grip holders and seating (16) on the upper side of the lagging (6), in particular properly shaped strut type seating (16) for the entrance grip holders (17) dismountable pieces, and in particular the entrance grip holders (17) are mantle type grip holders, and in particular the seating (16) are suited to attach the branch cable (19), respectively its conductors (19a, 19b, 19c).

5. Connection box according to any one of the preceding claims, **characterized in that** between the lower component (1) and the branch strut (5) there may be placed and mounted to the lower component (1) a lock support (4), which in particular has locking pawls (34) protruding from the base plane (20) towards the interior of the connection box for a proper locking of the fuse caps' (13a, 13b) passage pieces (21).

6. Connection box according to any one of the preceding claims, **characterized in that** the sealing of the connection box on the entrance frontal side (11) both in respect of the entrance cable (18) and the branch cable (19) is carried out by means of a loop packing (22) made of a porous synthetic material which may be introduced in the open space of the loop (23) formed between the lower component (1) and the upper component (2).

7. Connection box according to any one of the preceding claims, **characterized in that** on the opposed frontal side (12), the sealing of the connection box in respect of a branch cable (19) pulled through it is carried out by means of a resilient plastic material made of cable collar (24) closed to the outside.

8. Connection box according to any one of the preceding claims, **characterized in that** as branching terminals PE/N (15a, 15b) there are available guide rails laterally gliding grip holders.

9. Connection box according to any one of the preceding claims, **characterized in that** the fuse branch terminals (14a, 14b) are directly arranged on the fuse cap (13a, 13b) branch section.

10. Connection box according to any one of the preceding claims, **characterized in that** on the upper area of the upper component (2), in particular on the upper side of it, there is available at least one potential pass (45) which may open to allow thus the branch cable (19) get through.

11. Connection box according to claim 10, **characterized in that** the pass (45) is arranged in the longitudinal direction (10), aligned with at least one of the seating (16) for the cylindrically shaped pieces on the upper side of the lagging (6).
